# EUROPÄISCHE PATENTANMELDUNG

(11) **EP 2 362 109 A2**
(43) Veröffentlichungstag der Anmeldung: **31.08.2011**
(21) Anmeldenummer: 11151871.8
(22) Anmeldetag: 24.01.2011
(51) Int. Cl.: F16C 13/00, D21G 1/00, D21G 1/02

(54) **Walze und Verfahren zur Vermeidung von Schwingungen**

(30) Priorität: 18.02.2010 DE 102010002129
(71) Anmelder: Voith Patent GmbH, 89520 Heidenheim (DE)
(72) Erfinder: Niemann, Jochen, 47804, Krefeld (DE); Krüger, Lars, 47803, Krefeld (DE)

(57) **Zusammenfassung**

Die Erfindung betrifft eine Walze mit einem umlaufenden, auf einer drehfesten Achse gelagerten hohlen Walzenmantel, der zur Behandlung einer Faserstoffbahn mit einer Gegenwalze einen Nip bilden kann, wobei der Ringraum zwischen Mantel und Achse durch wenigstens zwei axiale Dichtungen in wenigstens zwei Kammern geteilt ist, die zur Erzielung einer gewünschten Walzendurchbiegung mit Druckfluiden unterschiedlichen Drucks befüllbar sind. Um Schwingungen des Mantels im Betrieb zu vermindern, wird durch mindestens einen sich auf der Achse abstützenden Aktuator ein Druck auf den Mantel ausgeübt.

## Beschreibung

Die Erfindung betrifft eine Walze mit einem umlaufenden, auf einer drehfesten Achse gelagerten hohlen Walzenmantel, der zur Behandlung einer Faserstoffbahn mit einer Gegenwalze einen Nip bilden kann, wobei der Ringraum zwischen Mantel und Achse durch wenigstens zwei axiale Dichtungen in wenigstens zwei Kammern geteilt ist, die zur Erzielung einer gewünschten Walzendurchbiegung mit Druckfluiden unterschiedlichen Drucks befüllbar sind.

Die Erfindung betrifft weiterhin ein Verfahren zur Vermeidung von Schwingungen in einem aus dieser Walze und einer Gegenwalze aufgebauten System.

Die Rede ist demnach von einer in Fachkreisen ais "Schwimmende Walze" oder "S-Walze" bezeichneten Walze. Diese Walzen werden heutzutage oft in (auf die Bahnbreite bezogen) schmaleren Kalandern eingesetzt. Der unterschiedliche Druck in den beiden Kammern reicht aus, um eine Durchbiegung zu erreichen, die sich im Wesentlichen der Krümmung der Gegenwalze anpasst.

Bei breiteren Kalandern reicht diese Art von Walzen in der Regel nicht mehr aus, um ein gewünschtes Querprofil der Faserstoffbahn zu erzielen, so dass sogenannte "Nipco-Walzen" von der Anmelderin eingesetzt werden müssen, die wesentlich aufwändiger sind und eine kompliziertere Ansteuerung verlangen. Bei diesen Walzen sind einzelne hydrostatische Stützelemente über die axiale Länge der Achse verteilt und wirken einzeln oder in Gruppen gegen den Mantel, um ihn entsprechend zu verformen. Bei der in der Erfindung verbesserten Walze handelt es sich um eine S-Walze, deren axiale Länge in der Größenordnung von 5 bis 8 m liegt. Dadurch, dass die heutigen Kalander immer schneller laufen müssen, kommt es auch bei Maschinen mit diesen Walzen häufiger zu dort bisher unbekannten Barringerscheinungen, die aus Eigenschwingungen des ganzen Systems heraus resultieren.

Es gibt zahlreiche aus zwei Walzen bestehende Maschinen zur Papierbehandlung bei denen verschiedene Versuche zur Vermeidung von Schwingungen erprobt und auch zu Schutzrechten angemeldet wurden. Da sind zunächst die Systeme, die versuchen, den Walzenmantel über seine Lagerung zu dämpfen. Hier seien beispielsweise die DE 296 24 490 U1 und die DE 198 21 854 C1 genannt. Leider ist es so, dass Dämpfungen der Schwingungen des Systems bei den relevanten Frequenzen zwischen 100 und 400 Hz über ein typisches Wälzlager (in der Regel Pendelrollenlager) kaum möglich sind. Auch aktive Systeme, die Kräfte in die Achse einleiten oder ein Biegemoment in die Achse einbringen, haben wenig Aussicht auf Erfolg, da die Kräfte oder Biegemomente nicht über die Pendelrollenlager übertragen werden können. Umgekehrt kann meist auch keine störende Schwingung des Walzenmantels an die Achse übertragen werden und dort dann dissipativ vernichtet werden. Daher schwingt der Walzenmantel beim Auftreten eines Barring-Problems an der Walze nahezu ungestört.

Die beschriebenen Maßnahmen sind bei S-Walzen auch deshalb nicht geeignet, um aktiv oder passiv Schwingungen des Walzenmantels im Bereich von 100 bis 400 Hz zu bekämpfen, da das große Ölvolumen im Inneren der schwimmenden Walze eine steife Ankoppelung von Achse und drehendem Mantel verhindert. Die in das System zusätzlich eingetragene Luft verhindert weiterhin, dass eine genügend hohe Ölsteifigkeit im Bereich von > 900 N/mm² entsteht.

Aus diesem Grund setzt man bei zu erwartenden Schwingungsproblemen auch bei schmaleren Kalandern Walzen mit einzelnen hydrostatischen Stützelementen über die axiale Länge ein.

Aus der DE 295 09 545 U1 ist eine Walze mit Schwingungsdämpfer, insbesondere zur Herstellung oder Behandlung von Faserstoffbahnen, z.B. Papier- oder Kartonbahnen, bekannt. Es handelt sich auch um eine Walze mit einer stationären Zentralachse und mit einem um diese Zentralachse rotierenden Walzenmantel. In der Zentralachse ist eine Reihe von z.B. zylindrischen Druckräumen vorgesehen, die sich in radialer Richtung erstrecken und je ein radial verschiebbares Stützelement aufnehmen. Jeder Druckraum kann mit einer Druckflüssigkeit gefüllt werden/ die eine hydraulische Stützkraft von der Zentralachse über das Stützelement auf den Walzenmantel überträgt, um so gezielt eine Durchbiegung des Walzenmantels einstellen zu können. Anstelle mehrerer Druckräume mit je einem Stützelement kann ein einziger langgestreckter Druckraum mit einem einzigen langgestreckten Stutzelement vorhanden sein.

Zum Zuführen der Druckflüssigkeit in die Druckräume ist in der stationären Zentralachse ein beispielsweise zentral angeordneter Zuführkanal vorgesehen, der über je eine verengte Leitung (z.B. über einen Drosselkanal, mit jedem der Druckräume verbunden ist. Die Dämpfung wirkt hier demnach passiv. Der Aufwand, eine solche Walze zu fertigen und später anzusteuern, ist groß.

Eine andere Walzenausführung mit innen liegenden aktiven Aktuatoren zur Dämpfung von Schwingungen findet sich in der DE 100 08 800 B4. Walzen der dort beschriebenen Art sind in Kalandern einsetzbar. Allerdings ist die Verwendung teuer und es bedarf eines erheblichen konstruktiven und fertigungstechnischen Aufwandes. Eine Möglichkeit zur gezielten Einstellung einer Durchbiegung ist bei diesem Walzentyp nicht gegeben.

Es ist die Aufgabe der Erfindung, die Schwingungen am Mantel einer S-Walze im Betrieb zu reduzieren.

Die Aufgabe wird vorrichtungsmäßig mit einer Walze gelöst, bei der während des Betriebs durch mindestens einen sich auf der Achse abstützenden Aktuator ein Druck auf den Mantel ausübbar ist.

Ein solcher Aktuator schafft eine steifere Anbindung des Mantels an die Achse, so dass trotz des üblichen Lagerspiels die Schwingungen des Mantels gedämpft werden können. Dazu übt der Aktuator einen Druck auf den Walzenmantel aus. In einem System mit einer Gegenwalze, also beispielsweise einem Softkalander, kann der Aktuator aus dem Inneren der S-Walze heraus aktive phasenverschobene Gegenschwingungen erzeugen, die zu einer deutlichen Verringerung der Schwingbewegungen führen.

Die beiden Längsdichtungen in einer S-Walze sind bekannt. Sie erlauben den unterschiedlichen Druckaufbau in einer dem Nip zugewandten und einer dem Nip abgewandten halbmondförmigen Kammer. Vielfach gestatten sie sogar eine Hubbewegung des Mantels, ohne dass die Dichtigkeit verloren geht. Um Ungleichförmigkeiten im Temperaturverlauf auf dem Walzenmantel zu vermeiden, wird das Öl, das der höher druckbelasteten Kammer von einer Walzenzapfenseite aus zugeführt wird, über die zweite Kammer mit niedrigerem Druck wieder zugeleitet.

Es ist von Vorteil, wenn der Aktuator in der Lage ist, mit hydraulisch, pneumatisch oder elektromagnetisch wirkenden Mitteln den Druck auf den Mantel auszuüben. Diese Mittel werden in erprobter Weise eingesetzt und sind relativ leicht und verschleißarm handhabbar. Jeder Kalander besitzt zudem sowieso eine hydraulische, pneumatische und elektrische Versorgung.

Vorzugsweise ist wenigstens ein Aktuator ein hydraulisch wirkendes Stützelement. Über ein hydraulisches System sind die größten Kräfte übertragbar. Der Mantel wird auf diese Weise wesentlich steifer an die Achse angebunden, als dies durch die Lager oder den Druck in einer Kammer geschieht. Außerdem wird die S-Walze mit Öl betrieben, so dass die Versorgung für ein hydraulisches Stützelement kein Problem ist. Das hydraulische Stützelement könnte dabei als Reibelement mit Kontaktreibung oder Rollreibung an der Innenseite des Walzenmantels gestaltet sein.

Mit Vorteil ist dafür gesorgt, dass das hydraulisch wirkende Stützelement ein hydrostatisches Stützelement ist, unter dem ein Druckraum angeordnet ist. Derartige Stützelemente sind aus sogenannten Nipco-Walzen bekannt und haben den Vorteil, nahezu ohne Reibung, genauer gesagt nur mit Fluidreibung, auf den rotierenden Mantel wirken zu können. Um in dem Druckraum möglichst wenig Kompression zuzulassen, ist dieser bevorzugt mit einer Entlüftungsbohrung versehen, um Lufteinschlüsse zu minimieren.

Damit das Profil im Nip nicht unzulässig beeinflusst wird, ist es von Vorteil, wenn die Wirkrichtung aller Aktuatoren nicht durch den Nip geht. Außerdem entsteht an der Stelle, wo beispielsweise ein Stützelement auf den Walzenmantel wirkt durch die Reibung der Flüssigkeit Wärme, die sich ebenfalls lokal negativ auf die Faserstoffbahn auswirken kann.

Bevorzugt wird der Druckraum über eine Druckfluidleitung versorgt, in der sich ein Drosselelement befindet. Durch Schwingungen verursachte Kräfte auf das Stützelement können mit Hilfe dieser Drosseln abgefangen werden. Die Drosseln dämpfen also auf passive Weise und können beispielsweise Bohrungs-, Sieb- oder Ringspaltdrosseln sein.

Noch günstiger ist es, wenn der vom Aktuator ausgeübte Druck im Betrieb pulsiert. Man wählt hier bevorzugt eine Frequenz, die mit der Systemeigenfrequenz interferiert, um die barringbildenden Schwingungen auszulöschen.

Dazu ist es bevorzugt, dass an oder in der Walze eine Sensoranordnung angebracht ist, die mit einer Steuereinrichtung in Verbindung steht, die den mindestens einen Aktuator ansteuert. Als Sensoranordnung sind die verschiedensten Messapparaturen zu verstehen. Das reicht vom Drehzahlmesser über Beschleunigungs- bzw. Geschwindigkeitsaufnehmer der Schwingungen, berührend wie berührungslos. Die Signale der Messergebnisse werden an eine Steuerungsvorrichtung weitergeleitet, die für eine wirkungsvolle aktive Ansteuerung des Aktuators sorgt, um die Walzenmantelschwingungen abzufangen.

Es hat sich herausgestellt, dass die Pulsation des Aktuators vorzugsweise in einem bestimmten Frequenzband erfolgt. Es ist dabei vorgesehen, dass der vom Aktuator ausgeübte Druck auf den Walzenmantel im Betrieb mit einer Frequenz von 100 bis 400 Hz pulsiert.

Vorzugsweise sind insgesamt maximal 8 Aktuatoren in der Walze vorgesehen. Man hat herausgefunden, dass die Aktuatoren besonders wirkungsvoll nahe den bzw. in den Schwingungsbäuchen des Walzensystems platziert werden können. Dazu reichen wenige Stützelemente, eventuell sogar nur eines, um einen schwingungsreduzierenden Effekt zu erzielen.

Bevorzugt sind die Aktuatoren symmetrisch über die Länge und/oder den Umfang der Walze verteilt. Dadurch werden Einflüsse vermieden, die sich ungleichmäßig auf die Faserstoffbahn in ihrer Breite auswirken. Bekäme die Walze nur auf einer Seite einen "Bauch" durch den Aktuator, so würde die Bahn an dieser Stelle ggf. stärker verdichtet als woanders.

Verfahrensmäßig wird die Aufgabe der Erfindung durch die Merkmale des Anspruchs 12 gelöst. So werden die Schwingungen in einem aus einer Walze gemäß Anspruch 1 bestehen Walze und einer Gegenwalze aufgebauten System dadurch vermieden, dass die Aktuatoren mit einem derartigen Druck aktiviert werden, dass sich die Gesamtsteifigkeit des Systems im Bereich von 100 bis 400 Hz um mindestens 10% steigert. Jedes System, das aus zwei Walzen besteht, besitzt eine kennzeichnende Eigenfrequenz und eine eigene Steifigkeit. Diese sind heutzutage auf einfachem weg mathematisch zu ermitteln. Für die Steifigkeit ist der Walzenmantel der S-Walze und dessen Lagerung ein wichtiger Einflussfaktor. Durch eine zusätzliche Abstützung über einen Aktuator kann die Gesamtsteifigkeit und somit die Eigenfrequenz stark verändert werden, was wiederum dazu führt, dass Schwingungen vermieden werden. Es hat sich herausgestellt, dass bei derartigen Systemen, beispielsweise einem Kalander, es ausreicht, die Gesamtsteifigkeit durch einen Aktuator um 10% anzuheben. Bereits dann sind die meisten aus Eigenfrequenzen resultierenden Schwingungen vermeidbar.

Bei den beschriebenen S-Walzen ist es vorteilhaft, wenn ein Aktuator durch ein hydraulisches, insbesondere hydrostatisch wirkendes Stützelement mit einem darunter liegenden Druckraum gebildet wird, weil dadurch auf einfache Weise die benötigten Drücke auf den Walzenmantel und im Falle von Hydrostatik zudem nahezu reibungsfrei aufgebracht werden können.

Es ist günstig, wenn zur Aktivierung der Schwingungsvermeidung der Druck im Druckraum verändert wird. Der Druck im Druckraum ist von außen mittels der Ölzufuhr einer Pumpe einstellbar und aktiv zu beeinflussen.

Vorzugsweise werden die Stützelemente geregelt aufgrund von Schwingungsmessungen mit Druck aktiviert. Das ermöglicht eine pulsierende Druckbeaufschlagung auf den Walzenmantel, die sich ergebende Schwingungen dämpft.

Die Erfindung wird im Folgenden anhand von Ausführungsbeispielen unter Bezugnahme auf die Zeichnungen näher erläutert. In dieser zeigen
Figur 1 eine schematische geschnittene Querschnittsdarstellung einer erfindungsgemäßen S-Walze und
Figur 2 einen schematischen Längsschnitt durch ein Walzensystem.

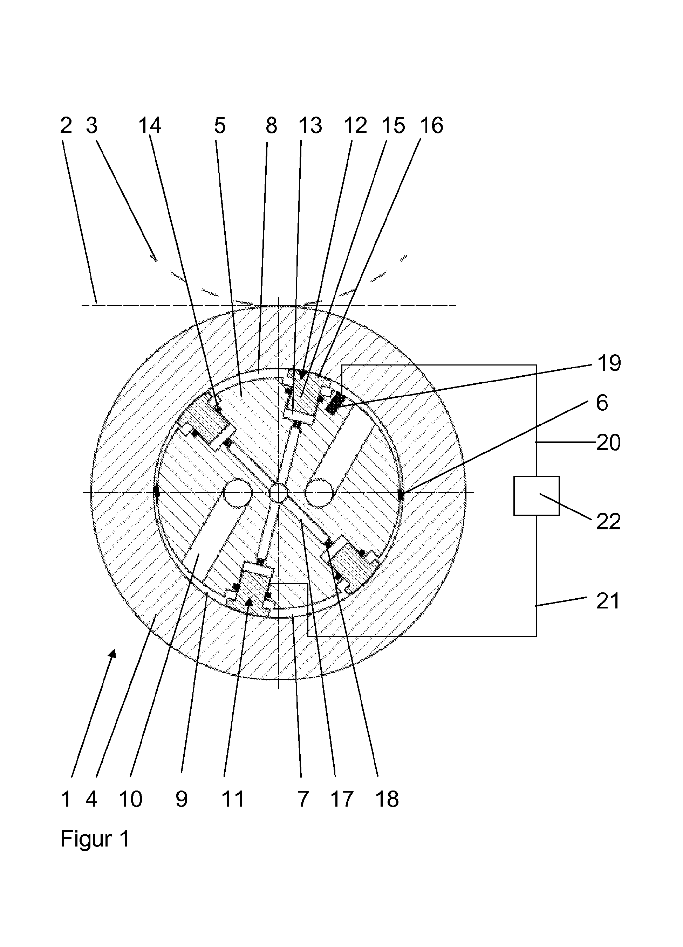

In Fig. 1 erkennt man die geschnittene erfindungsgemäße Walze 1. Sie arbeitet zusammen mit der gestrichelt angedeuteten Gegenwalze 3, um zwischen ihnen in einem sogenannten Nip einen ebenfalls gestrichelt angedeutete Faserstoffbahn 2 zu behandeln.

Die Walze 1 besitzt einen rotierenden Walzenmantel 4 und eine feststehende Achse 5. Zwischen beiden sind Längsdichtungen 6 vorgesehen, die den Ringraum 7 in eine obere Kammer 8 und einen untere Kammer 9 teilen. Diese Kammern sind mit einem Druckfluid, in der Regel Öl, unterschiedlichen Drucks gefüllt. Als Zu- bzw. Abführkanäle dieser Kammern 8, 9 für das Druckfluid sind die Kanäle 10 vorgesehen. Unterschiedliche Drücke in den Kammern 8 und 9 erlauben der Walze 1 eine Durchbiegung, die sich an die der Gegenwalze 3 anpassen kann. Das System aus Walze 1 und Gegenwalze 3 tendiert aus unterschiedlichsten Gründen, beispielsweise Unebenheiten der zu behandelnden Faserstoffbahn oder Unrundheiten in der Walze, zu Schwingungen. Diese sind nur schwer über die Lagerung zu dämpfen. Deshalb ist zum Zweck einer steiferen Anbindung zwischen Walzenmantel 4 und Achse 5 ein Aktuator 11, in diesem Ausführungsbeispiel wenigstens ein hydrostatisches Stützelement 12 eingesetzt, das sich auf der Achse 5 abstützend gegen den Walzenmantel 4 drückt. Das Stützelement 12 besteht aus einem in einem Druckraum 13 geführten Kolben 15, der einen Anlagekopf 16 aufweist, der gegen den Mantel 4 drückt. Üblicherweise ist dieser Anlagekopf 16 - hier nicht dargestellt - aus dem Druckraum 13 heraus hydrostatisch geschmiert. Der Druckraum ist ansonsten über Dichtungen 14 abgedichtet. Lediglich eine Entlüftungsleitung kann in nicht dargestellter weise vorgesehen werden, damit Luft im Druckraum 13 nicht zu einem Steifigkeitsverlust führt. In den Druckfluidzuführleitungen 17 ist vor dem Druckraum eine Drossel 18 vorgesehen, die Schwingungen auf das Stützelement 12 dämpfen können.

Eine Sensoranordnung 19 zur Messung von Schwingungen gibt seine Messsignale über eine Steuerleitung 20 an eine Steuereinrichtung 22 weiter, die wiederum - über die Steuerleitung 21 angedeutet - dafür sorgt, dass das Stützelement 12 im Druckraum 13 mit einem pulsierenden Druck derart versorgt wird, dass die Schwingungen des Systems interferierend reduziert werden. Es wird also über den Druckraum 13 unterhalb des Stützelementes 12 eine Gegenschwingung mit Druck auf den Mantel 4 eingeleitet.

In Figur 1 erkennt man vier über den Umfang verteilte Stützelemente. Keines dieser Stützelemente 12 hat seine Wirkrichtung zum mit der Gegenwalze 3 gebildeten Nip hin. Dadurch werden negative Einflüsse des Stützelementes 12 auf die Behandlung der Faserstoffbahn 2 vermieden.

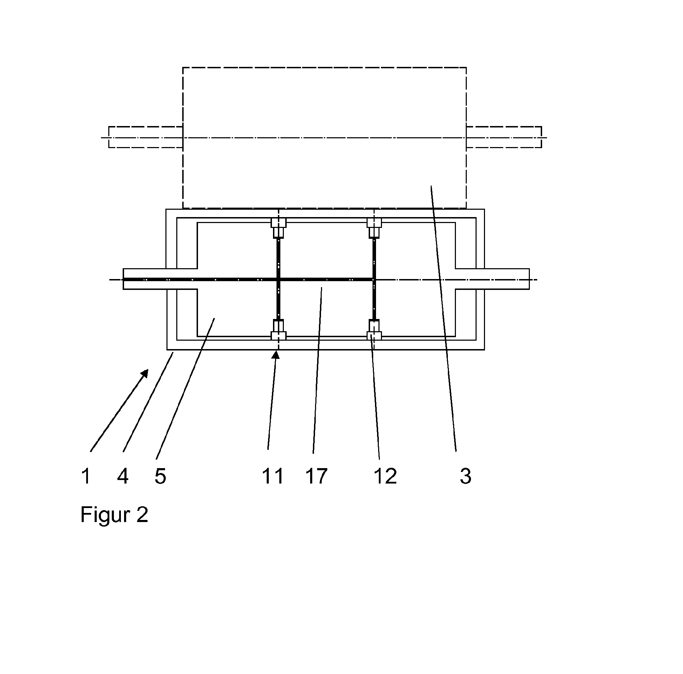

Figur 2 verdeutlicht die Anordnung der Aktuatoren 11 in der Walze 1 im Zusammenspiel mit der Gegenwalze 3. Zur besseren Übersichtlichkeit sind die Aktuatoren 11, auch hier Stützelemente 12, in der Pressebene der Walzen 1, 3 gezeichnet. In axialer Richtung sind sie genau da angeordnet, wo man, vor der Installation in mathematischen Modellen geklärt, die Schwingungsbäuche des Systems erwartet. Über die Druckfluidzuführleitungen 17 werden die Stützelemente bevorzugt in einem Frequenzbereich von 100 bis 400 mit Druck aktiviert. Das geht einher mit einer Erhöhung der Gesamtsteifigkeit des Systems aus den beiden Walzen 1 und 3 von mindestens 10 % und hat zur Folge, dass die Schwingungen erheblich reduziert werden, weil sich die Eigenfrequenz entsprechend verschiebt.

### Bezugszeichenliste

- 1: Walze
- 2: Faserstoffbahn
- 3: Gegenwalze
- 4: Walzenmantel
- 5: Achse
- 6: Längsdichtung
- 7: Ringraum
- 8: obere Kammer
- 9: untere Kammer
- 10: Kanal
- 11: Aktuator
- 12: Stützelement
- 13: Druckraum
- 14: Dichtung
- 15: Kolben
- 16: Anlagekopf
- 17: Druckfluidzuführleitung
- 18: Drossel
- 19: Sensoranordnung
- 20: Steuerleitung
- 21: Steuerleitung
- 22: Steuereinrichtung

## Patentansprüche

1. Walze mit einem umlaufenden, auf einer drehfesten Achse (5) gelagerten hohlen Walzenmantel (4), der zur Behandlung einer Faserstoffbahn (2) mit einer Gegenwalze (3) einen Nip bilden kann, wobei der Ringraum (7) zwischen Mantel (4) und Achse (5) durch wenigstens zwei axiale Dichtungen (6) in wenigstens zwei Kammern (8, 9) geteilt ist, die zur Erzielung einer gewünschten Walzendurchbiegung mit Druckfluiden unterschiedlichen Drucks befüllbar sind, **dadurch gekennzeichnet, dass** während des Betriebs durch mindestens einen sich auf der Achse abstützenden Aktuator (11) ein Druck auf den Mantel (4) ausübbar ist.

2. Walze gemäß Anspruch 1, **dadurch gekennzeichnet, dass** der Aktuator (11) in der Lage ist, mit hydraulisch, pneumatisch oder elektromagnetisch wirkenden Mitteln den Druck auf den Mantel (4) auszuüben.

3. Walze gemäß einem der Ansprüche 1 oder 2, **dadurch gekennzeichnet, dass** wenigstens ein Aktuator (11) ein hydraulisch wirkendes Stützelement ist.

4. Walze gemäß Anspruch 3, **dadurch gekennzeichnet, dass** das hydraulisch wirkende Stützelement ein hydrostatisches Stützelement (12) ist, unter dem ein Druckraum (13) angeordnet ist.

5. Walze gemäß einem der Ansprüche 1 bis 4, **dadurch gekennzeichnet, dass** die Wirkrichtung aller Aktuatoren (11) nicht durch den Nip geht.

6. Walze gemäß Anspruch 4, **dadurch gekennzeichnet, dass** der Druckraum (13) über eine Druckfluidzuführleitung (17) versorgt wird, in der sich eine Drossel (18) befindet.

7. Walze gemäß einem der Ansprüche 1 bis 6, **dadurch gekennzeichnet, dass** der vom Aktuator (11) ausgeübte Druck im Betrieb pulsiert.

8. Walze gemäß einem der Ansprüche 1 bis 7, **dadurch gekennzeichnet, dass** an oder in der Walze (1) eine Sensoranordnung (19) angebracht ist, die mit einer Steuereinrichtung (22) in Verbindung steht, die den mindestens einen Aktuator (11) ansteuert.

9. Walze gemäß einem der Ansprüche 7 oder 8, **dadurch gekennzeichnet, dass** der vom Aktuator (11) ausgeübte Druck im Betrieb mit einer Frequenz von 100 bis 400 Hz pulsiert.

10. Walze gemäß einem der vorangehenden Ansprüche, **dadurch gekennzeichnet, dass** insgesamt maximal 8 Aktuatoren (11) in der Walze (1) vorgesehen sind.

11. Walze gemäß einem der Ansprüche 1 bis 10, **dadurch gekennzeichnet, dass** die Aktuatoren (11) symmetrisch über die Länge und/oder den Umfang der Walze (1) verteilt sind.

12. Verfahren zur Vermeidung von Schwingungen in einem aus einer gemäß Anspruch 1 bestehen Walze (1) und einer Gegenwalze (3) aufgebauten System, **dadurch gekennzeichnet, dass** die Aktuatoren (11) mit einem derartigen Druck aktiviert werden, dass sich die Gesamtsteifigkeit des Systems im Bereich von 100 bis 400 Hz um mindestens 10% steigert.

13. Verfahren gemäß Anspruch 12, **dadurch gekennzeichnet, dass** ein Aktuator (11) durch wenigstens ein hydraulisches, insbesondere hydrostatisch wirkendes Stützelement (12) mit einem darunter liegenden Druckraum (13) gebildet wird.

14. Verfahren gemäß Anspruch 13, **dadurch gekennzeichnet, dass** zur Aktivierung der Schwingungsvermeidung der Druck im Druckraum (13) verändert wird.

15. Verfahren gemäß Anspruch 13, **dadurch gekennzeichnet, dass** das wenigstens eine Stützelement (12) geregelt aufgrund von Schwingungsmessungen mit Druck aktiviert wird.
